# EUROPEAN PATENT APPLICATION

(11) **EP 4 424 633 A2**
(43) Date of publication of application: **04.09.2024**
(21) Application number: 24159753.3
(22) Date of filing: 26.02.2024
(51) Int. Cl.: C01B 3/24, C01B 3/34

(54) **FEEDSTOCK GAS REACTOR WITH REGENERATIVE HEAT EXCHANGER**

(30) Priority: 02.03.2023 US 202363449383 P
(71) Applicant: Ekona Power Inc., Burnaby, British Columbia, V5A 2H5 (CA)
(72) Inventor: CADE, Brendan Gordon, Burnaby, V5A 2H5 (CA); COLEMAN, Timothy Scott, Burnaby, V5A 2H5 (CA)
(74) Representative: Boult Wade Tennant LLP

(57) **Abstract**

A feedstock gas reactor includes a reaction chamber and a first regenerative heat exchanger. A feedstock gas is flowed into the reaction chamber via the first regenerative heat exchanger. The feedstock gas is decomposed in the reaction chamber so as to produce reaction products. The reaction products are flowed out of the reaction chamber. The feedstock gas reactor may also include a second regenerative heat exchanger, and the reaction products may be flowed out of the reaction chamber via the second regenerative heat exchanger. Heat from the reaction products may stored in the second regenerative heat exchanger as the reaction products flow through the second regenerative heat exchanger, for later transfer to a feedstock gas flowing into the reaction chamber via the second regenerative heat exchanger.

## Description

### Field

The present disclosure relates to thermal pyrolysis and in particular to a feedstock gas reactor with a regenerative heat exchanger.

### Background

Thermal pyrolysis is a method by which a feedstock gas, such as a hydrocarbon, is decomposed without oxygen into its constituent elements (in the case of a hydrocarbon, carbon and hydrogen). The decomposition is triggered by sufficiently raising the temperature of the feedstock gas to a point at which the chemical bonds of the elements of the feedstock gas break down.

Such pyrolysis may be achieved, for example, by bringing the feedstock gas into thermal contact with a hot fluid. For instance, combustion product gases, formed as a result of combusting a combustible fuel, may be mixed with the feedstock gas. At high-enough temperatures, the mixing of the hot fluid with the feedstock gas, and the transfer of thermal energy from the hot fluid to the feedstock gas, is sufficient to cause the feedstock gas to break down and decompose.

In order for the pyrolysis to be made more efficient, it is preferable for the feedstock to be pre-heated prior to mixing with the combustion products. Pre-heating the feedstock may reduce the minimum temperature of the combustion products that is required to trigger decomposition of the feedstock.

However, pre-heating the feedstock presents a number of challenges. For example, the valving through which the feedstock flows may not be able to withstand the relatively high temperature of the pre-heated feedstock. In addition, excessive pre-heating may result in unwanted reactions spontaneously occurring in the pre-heater. In some cases, this may result in undesirable carbon formation on the surfaces of the pre-heater.

### Summary

According to a first aspect of the disclosure, there is provided a method of operating a feedstock gas reactor, wherein: the feedstock gas reactor comprises: a reaction chamber; and a first regenerative heat exchanger; and the method comprises: flowing a feedstock gas into the reaction chamber via the first regenerative heat exchanger; decomposing the feedstock gas in the reaction chamber so as to produce one or more reaction products; and flowing the one or more reaction products out of the reaction chamber.

The feedstock gas reactor may further comprise a second regenerative heat exchanger. Flowing the one or more reaction products out of the reaction chamber may comprise flowing the one or more reaction products out of the reaction chamber via the second regenerative heat exchanger, wherein heat from the one or more reaction products is stored in the second regenerative heat exchanger as the one or more reaction products flow through the second regenerative heat exchanger.

The method of claim may further comprise, after flowing the one or more reaction products out of the reaction chamber: flowing further feedstock into the reaction chamber via the second regenerative heat exchanger, wherein heat stored in the second regenerative heat exchanger is transferred to the further feedstock as the further feedstock flows through the second regenerative heat exchanger; decomposing the further feedstock in the reaction chamber so as to produce one or more further reaction products; and flowing the one or more further reaction products out of the reaction chamber via the first regenerative heat exchanger, wherein heat from the one or more further reaction products is stored in the first regenerative heat exchanger as the one or more further reaction products flow through the first regenerative heat exchanger.

The feedstock gas reactor may further comprise an inlet adjacent the second regenerative heat exchanger. Flowing the feedstock gas into the reaction chamber may comprise flowing the feedstock gas into the reaction chamber via the inlet and then via the second regenerative heat exchanger.

The method may further comprise actively heating the second regenerative heat exchanger.

Actively heating the second regenerative heat exchanger may comprise actively heating the second regenerative heat exchanger only when flowing the further feedstock gas into the reaction chamber via the second regenerative heat exchanger.

An axial heat conductivity of the second regenerative heat exchanger may be lower than a radial heat conductivity of the second regenerative heat exchanger.

Flowing the one or more reaction products out of the reaction chamber may comprise flowing the one or more reaction products out of the reaction chamber via the first regenerative heat exchanger, wherein heat from the one or more reaction products is stored in the first regenerative heat exchanger as the one or more reaction products flow through the first regenerative heat exchanger.

The method may further comprise actively heating the first regenerative heat exchanger.

Actively heating the first regenerative heat exchanger may comprise actively heating the first regenerative heat exchanger only when flowing the feedstock gas into the reaction chamber via the first regenerative heat exchanger.

Decomposing the feedstock gas may comprise injecting a hot fluid into the reaction chamber to mix with the feedstock gas, wherein heat from the hot fluid is transferred to the feedstock gas to decompose the feedstock gas.

Injecting the hot fluid may comprise: combusting a combustible gas mixture to produce one or more hot combustion products; and injecting the one or more hot combustion products into the reaction chamber.

The feedstock gas may comprise one or more first compounds. The hot fluid may comprise one or more second compounds selected so that, during decomposition of the feedstock gas, the one or more second compounds chemically react with the one or more first compounds to produce the one or more reaction products.

The feedstock gas reactor may further comprise an inlet adjacent the first regenerative heat exchanger. Flowing the feedstock gas into the reaction chamber may comprise flowing the feedstock gas into the reaction chamber via the inlet adjacent the first regenerative heat exchanger and then via the first regenerative heat exchanger.

An axial heat conductivity of the first regenerative heat exchanger may be lower than a radial heat conductivity of the first regenerative heat exchanger.

According to a further aspect of the disclosure, there is provided a system comprising: a feedstock gas reactor comprising: a reaction chamber; and a first regenerative heat exchanger; valving and one or more compressors for allowing fluids to flow into and out of the reaction chamber; and a controller configured to control the valving and the one or more compressors so as to: flow a feedstock gas into the reaction chamber via the first regenerative heat exchanger; inject a hot fluid into the reaction chamber so as to decompose the feedstock gas and generate one or more reaction products; and flow the one or more reaction products out of the reaction chamber.

This summary does not necessarily describe the entire scope of all aspects. Other aspects, features, and advantages will be apparent to those of ordinary skill in the art upon review of the following description of specific embodiments.

### Brief Description of the Drawings

Embodiments of the disclosure will now be described in detail in conjunction with the accompanying drawings of which:
FIG. 1 is a schematic diagram of a feedstock gas reactor undergoing a first reaction cycle, according to an embodiment of the disclosure;
FIG. 2 is a schematic diagram of the feedstock gas reactor of FIG. 1 undergoing a second reaction cycle, according to an embodiment of the disclosure;
FIG. 3 shows a regenerative heat exchanger according to an embodiment of the disclosure;
FIG. 4 is a magnified view of a portion of the feedstock gas reactor of FIG. 1, according to an embodiment of the disclosure;
FIG. 5 is a schematic diagram of temperature gradients across regenerative heat exchangers in a feedstock gas reactor, according to an embodiment of the disclosure;
FIG. 6A is a schematic diagram of a feedstock gas reactor with a regenerative heat exchanger undergoing active heating, according to an embodiment of the disclosure;
FIG. 6B is an end-on view of the feedstock gas reactor of FIG. 6A, according to an embodiment of the disclosure;
FIG. 7 is a flow diagram of a method of operating a feedstock gas reactor, according to an embodiment of the disclosure; and
FIGS. 8A and 8B are schematic diagrams of dual valves (FIG. 8A) and a three-way valve (FIG. 8B), according to embodiments of the disclosure.

### Detailed Description

The present disclosure seeks to provide novel feedstock gas reactors and novel methods of operating a feedstock gas reactor. While various embodiments of the disclosure are described below, the disclosure is not limited to these embodiments, and variations of these embodiments may well fall within the scope of the disclosure which is to be limited only by the appended claims.

According to embodiments of the disclosure, there are described methods of performing pyrolysis of a feedstock gas, such as natural gas or a hydrocarbon gas, such as methane. Such methods of pyrolysis, as well as example feedstock gas reactors that may be used for such pyrolysis, are described in further detail in PCT Publication No. WO2020/118417, herein incorporated by reference in its entirety.

According to embodiments of the disclosure, there is described a process of feedstock decomposition, or pyrolysis, using a feedstock gas reactor. The feedstock gas reactor includes a reaction chamber and a first regenerative heat exchanger. For example, the first regenerative heat exchanger may be positioned at a first end of the reaction chamber. According to some embodiments, the reactor includes at least one additional regenerative heat exchanger. For example, the second regenerative heat exchanger may be positioned at a second end of the reaction chamber, opposite the first end.

A feedstock gas is caused to flow into the reaction chamber, via the first regenerative heat exchanger. For example, a controller comprising circuitry, such as a computer processor, may be configured to control suitable valving and one or more compressors to allow the feedstock to flow under pressure into the reaction chamber. Once a predetermined volume of feedstock gas has filled the reaction chamber, the valving may be closed to seal the feedstock gas within the reaction chamber.

The feedstock gas is then decomposed in the reaction chamber so as to produce one or more reaction products. For example, according to some embodiments, in order to trigger decomposition of the feedstock, a combustible gas mixture is caused to flow into one or more combustion chambers connected to the reaction chamber. The loading of the combustion chambers with the combustible gas mixture may occur simultaneously to the loading of the reaction chamber with the feedstock. The combustible gas mixture is then combusted (for example, by controlling an igniter in each combustion chamber) to produce hot combustion products. The hot combustion products that are formed as a result of the combustion flow under pressure into the reaction chamber and mix with the feedstock gas.

Once the temperature and pressure critical for decomposition of the feedstock gas are reached, the feedstock gas decomposes into its constituent components. The products of the decomposition (i.e. the reaction products) are then flowed out of the reaction chamber, by controlling an outlet valve. For embodiments of reaction chambers with multiple regenerative heat exchangers (e.g. reaction chambers with a first regenerative heat exchanger at the first end of the reaction chamber and a second regenerative heat exchanger at the second end of the reaction chamber), the reaction products are flowed out of the reaction chamber via the second regenerative heat exchanger (or, more generally, via a regenerative heat exchanger through which the feedstock did not flow when entering the reaction chamber). As a result, heat from the reaction products is stored in the second regenerative heat exchanger as the reaction products flow through the second regenerative heat exchanger.

Once the reaction chamber is evacuated of reaction products, the reaction chamber may be re-loaded with feedstock. This time, the direction of flow of feedstock into the reaction chamber may be reversed, and the feedstock may enter the reaction chamber via the second regenerative heat exchanger. As a result, heat stored in the second regenerative heat exchanger may be transferred to the fresh feedstock, effectively pre-heating the fresh feedstock prior to decomposition.

As before, the pre-heated feedstock is then caused to decompose, for example by mixing the feedstock with hot combustion products generated from combustion of a combustible gas mixture. The reaction products that result from this decomposition are then caused to flow out of the reaction chamber, via the first regenerative heat exchanger. As a result, heat from the reaction products is stored in the first regenerative heat exchanger as the reaction products flow through the first regenerative heat exchanger.

The process may be repeated any number of further times, with the direction of flow of feedstock and reaction products into and out of the reaction chamber being reversed every subsequent reaction cycle.

The use of one or more regenerative heat exchangers allows the thermal energy of the reaction products to be beneficially stored and used to pre-heat the feedstock in the subsequent reaction cycle, thereby lowering the temperature and pressure requirements of the combustion products (or other hot fluid) that are used to decompose the feedstock (this may be particularly beneficial in the absence of any other preheating of the feedstock). In addition, the risk posed to the external valving that allows the feedstock and reaction products to flow into and out of the reaction chamber is reduced, since the valves do not have to be exposed to the relatively high temperatures of pre-heated feedstock or hot reaction products.

Turning now the drawings, embodiments of the disclosure will be described in greater detail.

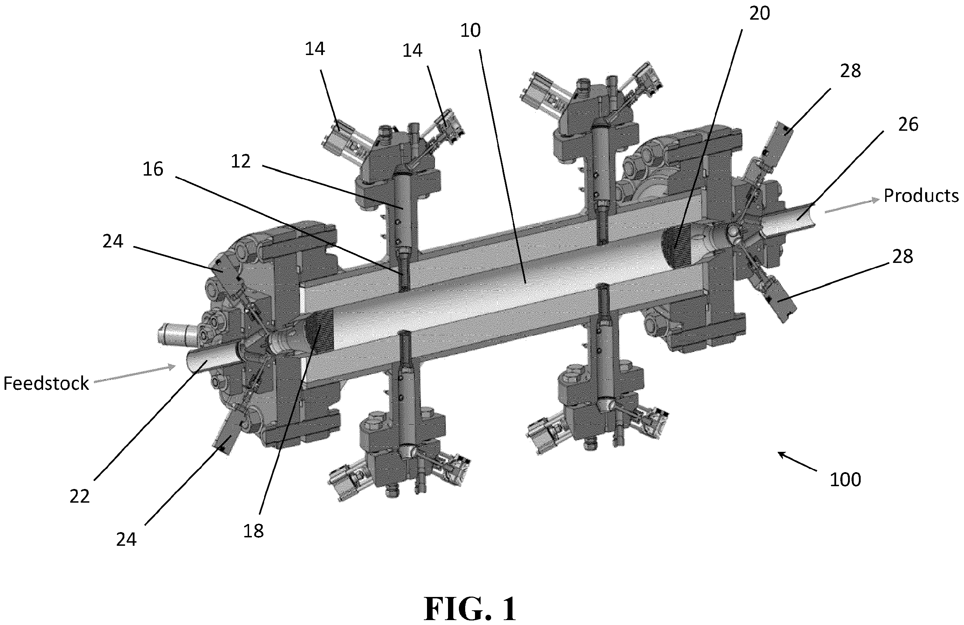

Turning first to FIG. 1, there is shown an embodiment of a feedstock gas reactor 100 ("reactor") for decomposing a feedstock gas ("feedstock"). Reactor 100 comprises a central reaction chamber 10 to which are fluidly connected a number of individual combustion chambers 12. Four combustion chambers 12 are shown in FIG. 1, although reactor 100 may comprise any suitable number of combustion chambers, including a single combustion chamber. Each combustion chamber 12 is connected to reaction chamber 10 via an injector nozzle 16 extending through a sidewall of reaction chamber 10. Multiple passageways (not shown) at the end of each injector nozzle 16 allow for combustion products formed within combustion chambers 12 to be injected along multiple different directions into reaction chamber 10. Valves 14 provided adjacent each combustion chamber 12 may be controlled to allow the flow of a pre-mixed combustible gas mixture into each combustion chamber 12. Alternatively, valves 14 may control the flow of an oxidant (such as pure oxygen or air) and a fuel (for example having the same composition as the feedstock) into each combustion chamber 12, wherein the oxidant and the fuel mix within each combustion chamber 12.

At a first end of reaction chamber 10 is provided a first manifold block comprising valves 24 for allowing feedstock to flow into reaction chamber 10 via an inlet/outlet 22, and for reaction products to flow out of reaction chamber 10 via inlet/outlet 22. Similarly, at the opposite end of reaction chamber 10 is provided a second manifold block comprising valves 28 for allowing reaction products to flow out of reaction chamber 10 via an inlet/outlet 26, and for feedstock to flow into reaction chamber 10 via inlet/outlet 26.

At each end of reaction chamber 10 is provided a regenerative heat exchanger. In particular, a first regenerative heat exchanger 18 is provided at the end of reaction chamber 10 that is adjacent the first manifold block, and a second regenerative heat exchanger 20 is provided at the end of reaction chamber 10 that is adjacent the second manifold block.

Although not shown in FIG. 1, one or more controllers (such as a microcontroller or any other suitable controller comprising circuitry) may be configured to initiate flow of feedstock into reaction chamber 10, as well as flow of reaction products out of reaction chamber 10, by controlling valves 24, 28, and optionally one or more compressors. In addition, the one or more controllers are configured to initiate flow of the combustible gas mixture into combustion chambers 12, by controlling valves 14, and optionally one or more compressors.

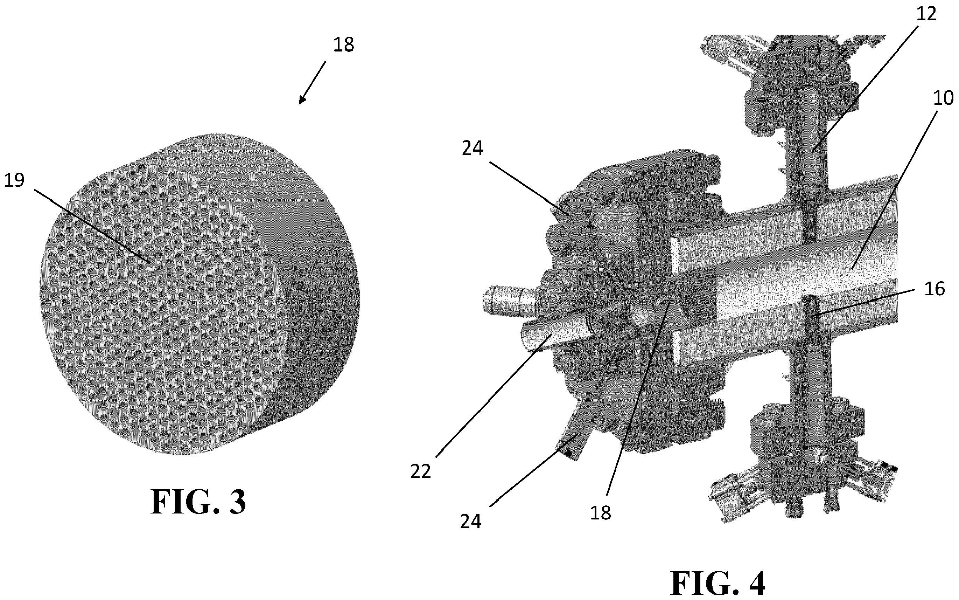

Turning to FIGS. 3 and 4, there is shown regenerative heat exchanger 18 in greater detail. According to the embodiments shown in the drawings, regenerative heat exchangers 18, 20 generally comprise a cylindrical block of a material with a coefficient of thermal conductivity that is greater in the radial direction than in the axial direction (the axial direction being the direction defined by the longitudinal axis of reaction chamber 10). According to some embodiments, this thermal conductivity profile may be achieved by stacking plates made of a conductive material, with each pair of adjacent plates being separated by a non-conductive material (i.e. non-conductive separators). According to some embodiments, surface contact between adjacent conductive plates may be sufficient to reduce the axial thermal conductivity without the need for non-conductive separators. In FIG. 3, regenerative heat exchanger 18 includes a number of conduits 19 formed within regenerative heat exchanger 18 and extending axially from one side of regenerative heat exchanger 18 to the other side of regenerative heat exchanger 18. Conduits 19 allow for the flow of feedstock / reaction products through regenerative heat exchanger 18. As hot reaction products flow through conduits 19 of heat exchanger 18, thermal energy is transferred to and stored within heat exchanger 18. Conversely, as feedstock flows through conduits 19 of heat exchanger 18, the stored thermal energy is transferred to the feedstock.

More generally, the regenerative heat exchangers that are used may take any various suitable forms and/or shapes. Typical properties of the regenerative heat exchangers include a relatively high surface area, a relatively high heat capacity, and a relatively low pressure drop. According to some embodiments, the regenerative heat exchangers may have a specific surface area of about 1,000 m²/m³, and a heat capacity of about 500 J/kg-K. According to some embodiments, the regenerative heat exchangers comprise Inconel^{®} or another high-temperature, high heat capacity material (such as a ceramic) fabricated with an outside diameter being the same as the inside diameter of reaction chamber 10 (to ensure that the feedstock / reaction products flow through the regenerative heat exchangers and not around them). Furthermore, the regenerative heat exchangers can be designed and fabricated using any number of suitable techniques including, for example, the use of particle beds, stacked wire mesh, and any suitable techniques discussed in Kays, W.M., and A.L. London, Compact Heat Exchangers, McGraw Hill Text, herein incorporated by reference in its entirety.

Returning to FIG. 1, there will now be described a first reaction cycle using feedstock gas reactor 100. Feedstock, such as natural gas or a hydrocarbon, such as methane, is fed under pressure into reaction chamber 10, via inlet/outlet 22. As the feedstock flows into reaction chamber 10, the feedstock flows through regenerative heat exchanger 18. Once reaction chamber 10 is filled with the feedstock, valves 24 are closed (as are valves 28). At the same time, a combustible gas mixture, such as a mixture of natural gas and an oxidant, is fed under pressure into each combustion chamber 12, via valves 14. Once combustion chambers 12 are filled with the combustible gas mixture, valves 14 are closed. Alternatively, the fuel and the oxidant may be fed separately into each combustion chamber 12.

The combustible gas mixture within each combustion chamber 12 is then combusted (for example, using igniters under control of a computer controller) which results in the generation of hot combustion products. The combustion products flow under pressure into reaction chamber 10 via injector nozzles 16 and through the passageways provided at the end of each injector nozzle 16. The injection of the combustion products from each injector nozzle 16 results in mixing of the combustion products with the feedstock. The opposite orientations of diametrically opposed injector nozzles 16 may result in improved mixing of the hot combustion products with the feedstock, as described in co-pending US patent publication no. US 2023/0184428, filed on November 28, 2022, herein incorporated by reference in its entirety.

As a result of the flow of combustion products into reaction chamber 10, thermal energy is transferred from the combustion products to the feedstock. Energy is also transferred from the combustion products to the feedstock via dynamic compression of the feedstock as a result of the pressure increasing within reaction chamber 10. Past a certain point, the increase in the temperature of the feedstock is sufficient to drive decomposition or pyrolysis of the feedstock. In the case of methane, for example, the decomposition takes the following form:

CH₄ + energy → C + 2H₂

Following decomposition of the feedstock, valves 28 are opened to cause the reaction products to evacuate reaction chamber 10 via inlet/outlet valve 26. The corresponding drop in pressure of the gases within reaction chamber 10 results in a drop in temperature of the gases which quenches the pyrolysis reaction. As the reaction products flow out of reaction chamber 10, the reaction products flow through regenerative heat exchanger 20 and transfer thermal energy to regenerative heat exchanger 20 that stores the thermal energy.

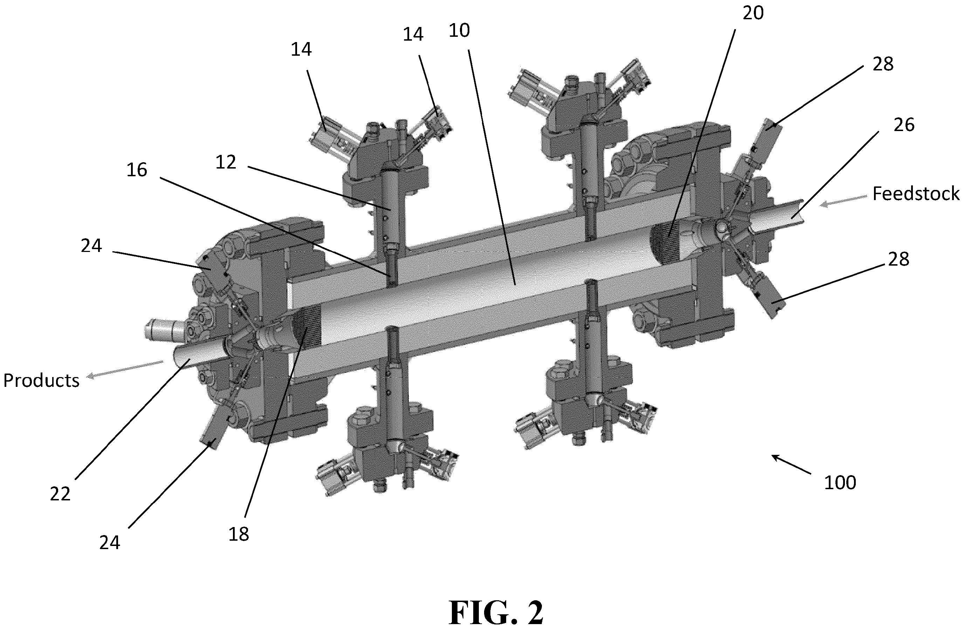

Turning now to FIG. 2 (which shows the same feedstock gas reactor 100 during a second, consecutive reaction cycle), feedstock is fed under pressure into reaction chamber 10, via inlet/outlet valve 26. As the feedstock flows into reaction chamber 10, the feedstock flows through second regenerative heat exchanger 20. Thermal energy stored within regenerative heat exchanger 20 from the first reaction cycle is transferred to the feedstock, thereby preheating the feedstock prior to mixing the feedstock with combustion products within reaction chamber 10. Once reaction chamber 10 is filled with the preheated feedstock, valves 24 and 28 are closed.

As with the first reaction cycle, at the same time, the combustible gas mixture (or separate fuel and oxidant) is fed under pressure into each combustion chamber 12, via valves 14. The combustible mixture within each combustion chamber 12 is then combusted which results in the generation of hot combustion products. The combustion products flow under pressure into reaction chamber 10 via injector nozzles 16 and through the passageways provided at the end of each injector nozzle 16. The injection of the combustion products from each injector nozzle 16 results in mixing of the combustion products with the feedstock.

As a result of the flow of combustion products into reaction chamber 10, thermal energy is transferred from the combustion products to the preheated feedstock. Energy is also transferred from the combustion products to the preheated feedstock via dynamic compression of the feedstock as a result of the pressure increasing within reaction chamber 10. Past a certain point, the increase in the temperature of the feedstock is sufficient to drive decomposition or pyrolysis of the feedstock.

Following decomposition of the feedstock, valves 24 are opened to result in quenching of the pyrolysis reaction (as described above), with reaction products within reaction chamber 10 being extracted from reaction chamber 10 via inlet/outlet 22. As the reaction products flow out of reaction chamber 10, the reaction products flow through regenerative heat exchanger 18 and transfer thermal energy to regenerative heat exchanger 18 that stores the thermal energy.

The process may then be repeated again, as shown in FIG. 1. By reversing the flow of feedstock and reaction products into / out of reaction chamber 10 with each subsequent reaction cycle, thermal energy from the reaction products generated in a given reaction cycle may be temporarily stored in a regenerative heat exchanger and transferred to the feedstock entering reaction chamber 10 in the subsequent reaction cycle, in order to preheat the feedstock. In other words, the heat from the gases leaving reactor 100 in a given reaction cycle is used to heat the gases entering reactor 100 in the subsequent reaction cycle. Preheating the feedstock in this fashion has a number of benefits, as described above.

For example, the heat of combustion that is required to decompose the feedstock may be lowered, since the feedstock's temperature is already elevated prior to being mixed with the combustion products. Furthermore, the high temperatures experienced during the pyrolysis process will be contained within reaction chamber 10, while the lower feedstock and reaction product temperatures upstream and downstream of reaction chamber 10 may allow for reduced heat loss to the environment.

According to some embodiments, feedstock entering reaction chamber 10 may enter at about 1,000 K, for example. As the feedstock flows past regenerative heat exchanger 18, the temperature of the feedstock may increase to 1,300 K as the feedstock absorbs heat stored within regenerative heat exchanger 18 from a previous reaction cycle.

In addition, valves 24 and 28, and associated inlets/outlets 22 and 26, may be designed to be simpler and more robust, since there may be no need to preheat the feedstock outside of reactor 100, and therefore such components are protected from the high temperatures of an already-preheated feedstock, and hot reaction products, flowing into and out of reactor 100.

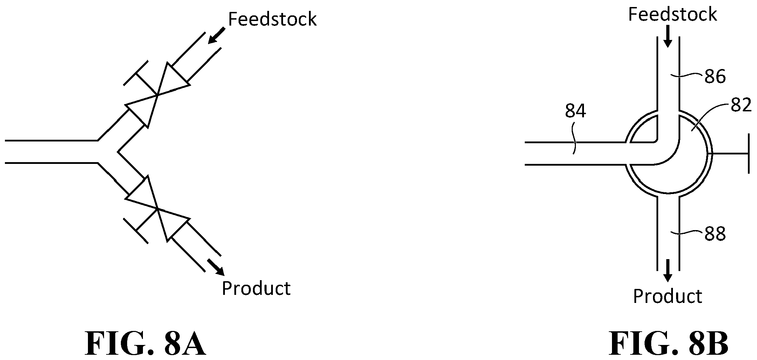

According to some embodiments, the flow switching may be achieved using two valves (an example of which is shown in FIG. 8A), such as poppet valves, with each valve connected to either the feedstock supply or the product stream. Alternatively, a three-way flow valve (an example of which is shown in FIG. 8B) could be used to reduce the associated piping required to enable the the flow switching. For example, as can be seen in FIG. 8B, the three-way flow valve includes a movable component 82 that allows for conduit 84 to alternately be fluidly connected to conduit 86 and conduit 88.

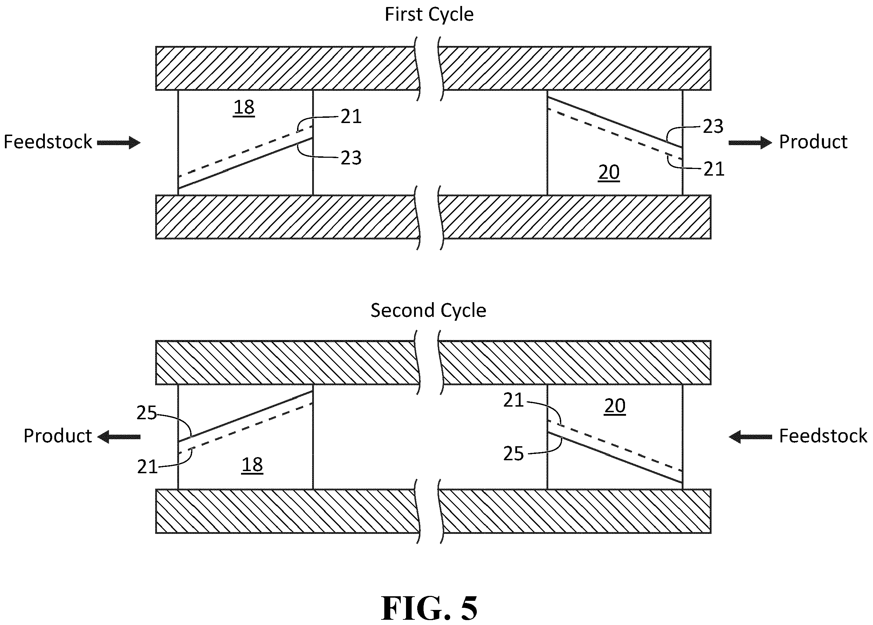

After a number of consecutive reaction cycles, regenerative heat exchangers 18, 20 will exhibit a temperature gradient in the axial direction, with the hottest portion of the regenerative heat exchanger facing the interior of reaction chamber 10. During each reaction cycle, the temperature of the regenerative heat exchanger at each point along the gradient will increase as the regenerative heat exchanger absorbs heat from the product gases flowing through it, and will decrease as the regenerative heat exchanger releases heat to the feedstock flowing through it. FIG. 5 shows an approximation of this gradient shift at the end of each reaction cycle. The dotted line 21 is the average temperature gradient of the regenerative heat exchanger. Line 23 shows the shifted gradient at the end of a first reaction cycle. Line 25 shows the shifted gradient at the end of the subsequent reaction cycle.

According to some embodiments, one or both of regenerative heat exchangers 18, 20 may be actively heated using an external heating source. This additional thermal energy may be used to further pre-heat the incoming feedstock, thereby further reducing the preheating requirements of the feedstock and to further reduce parasitic heat loss.

According to some embodiments, regenerative heat exchangers 18, 20 are actively heated using electrical heaters, thereby bringing the temperature of each regenerative heat exchanger 18, 20 to, for example, at least 1,300 K. For example, such electrical heaters may be wrapped inside the regenerative heat exchangers. Other suitable means of actively heating regenerative heat exchangers 18, 20 may be used. For instance, any of the following forms of active heating may be used: resistance/induction heating; microwave heating; heating using circulation of an external fluid; magnetic heating; heating using combustion product gases; nuclear radiation; friction; and acoustic heating. According to some embodiments, active heating of regenerative heat exchangers 18, 20 need only happen when feedstock is flowing through the regenerative heat exchanger. For example, referring to FIG. 1, active heating of regenerative heat exchanger 18 may occur when feedstock is flowing through regenerative heat exchanger 18, and the active heating of regenerative heat exchanger 18 may be discontinued when feedstock stops flowing through regenerative heat exchanger 18. Likewise, active heating of regenerative heat exchanger 20 may occur when feedstock is flowing through regenerative heat exchanger 20, and the active heating of regenerative heat exchanger 20 may be discontinued when feedstock stops flowing through regenerative heat exchanger 20.

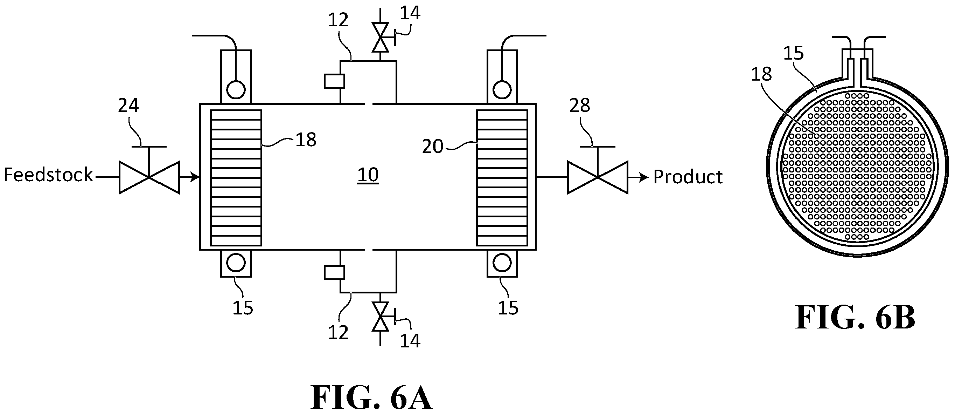

FIGS. 6A and 6B show side-on and end-on views of a feedstock gas reactor employing active heating of regenerative heat exchangers 18 and 20. As can be seen, an induction coil 15 is wrapped around each regenerative heat exchanger 18 and 20, to provide active heating to regenerative heat exchangers 18 and 20. Components of the feedstock gas reactor shown in FIGS. 6A and 6B are labelled using the same reference numbers as corresponding components in feedstock gas reactor 100 of FIG. 1.

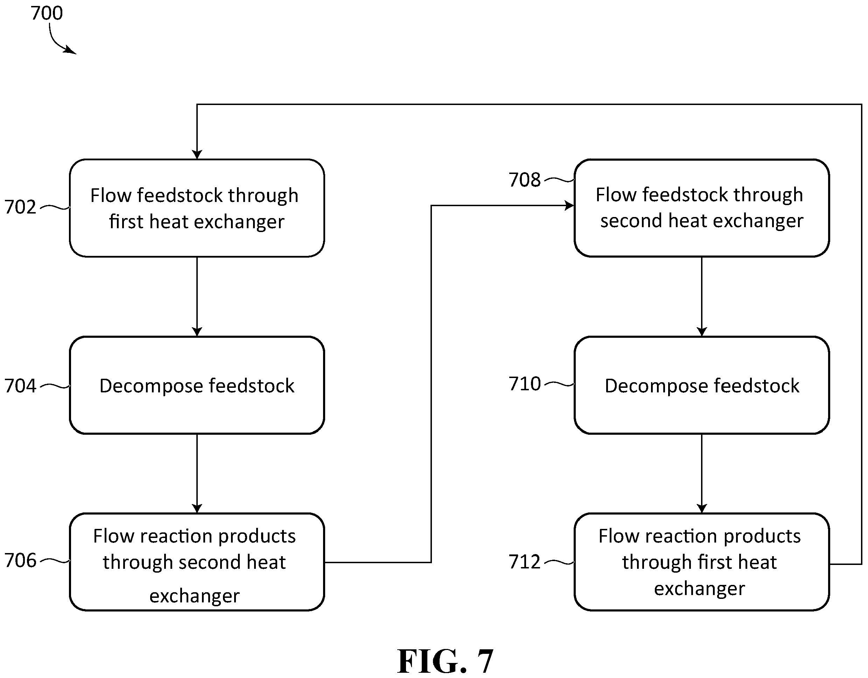

Turning to FIG. 7, there is shown a general method 700 of operating a feedstock gas reactor using one or more regenerative heat exchangers.

At block 702, feedstock is caused to flow into the reaction chamber, via a first regenerative heat exchanger.

At block 704, the feedstock is decomposed. Decomposition of the feedstock may be triggered, for example, by loading one or more combustion chambers with a combustible gas mixture, igniting the combustible gas mixture, and causing the resultant hot combustion products to flow into the reaction chamber to mix with the feedstock.

At block 706, reaction products generated as a result of the decomposition of the feedstock gas flow out of the reaction chamber, via a second regenerative heat exchanger. As a result, thermal energy from the reaction products is stored in the second regenerative heat exchanger as the reaction products flow through the second regenerative heat exchanger.

At block 708, feedstock is caused to flow into the reaction chamber, via the second regenerative heat exchanger. Heat stored in the second regenerative heat exchanger from the previous reaction cycle is transferred to the feedstock as the feedstock flows through the second regenerative heat exchanger.

At block 710, the feedstock is decomposed, for example as described above.

At block 712, reaction products generated as a result of the decomposition of the feedstock gas flow out of the reaction chamber, via the first regenerative heat exchanger. As a result, thermal energy from the reaction products is stored in the first regenerative heat exchanger as the reaction products flow through the first regenerative heat exchanger.

The process then returns to block 702, wherein further feedstock is caused to flow into the reaction chamber, via the first regenerative heat exchanger. Heat stored in the first regenerative heat exchanger from the previous reaction cycle is transferred to the feedstock as the feedstock flows through the first regenerative heat exchanger.

According to some embodiments, the feedstock gas reactor may be operated using only a single regenerative heat exchanger. According to such embodiments, the reactor may be designed such that feedstock and reaction products flow into and out of the reaction chamber on the same side of the reactor. Therefore, feedstock and reaction products may be caused to respectively flow into and out of the reaction chamber via the single regenerative heat exchanger. As the reaction products flow out of the reactor, heat from the reaction products may be transferred to the regenerative heat exchanger, and this heat may then be used to pre-heat feedstock entering the reaction chamber via the regenerative heat exchanger in the next reaction cycle.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

Use of language such as "at least one of X, Y, and Z," "at least one of X, Y, or Z," "at least one or more of X, Y, and Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

## Claims

1. A method of operating a feedstock gas reactor, wherein:
the feedstock gas reactor comprises:
a reaction chamber; and
a first regenerative heat exchanger;
and the method comprises:
flowing a feedstock gas into the reaction chamber via the first regenerative heat exchanger;
decomposing the feedstock gas in the reaction chamber so as to produce one or
more reaction products; and
flowing the one or more reaction products out of the reaction chamber.

2. The method of claim 1, wherein:
the feedstock gas reactor further comprises a second regenerative heat exchanger; and
flowing the one or more reaction products out of the reaction chamber comprises flowing the one or more reaction products out of the reaction chamber via the second regenerative heat exchanger, wherein heat from the one or more reaction products is stored in the second regenerative heat exchanger as the one or more reaction products flow through the second regenerative heat exchanger.

3. The method of claim 2, further comprising, after flowing the one or more reaction products out of the reaction chamber:
flowing further feedstock into the reaction chamber via the second regenerative heat exchanger, wherein heat stored in the second regenerative heat exchanger is transferred to the further feedstock as the further feedstock flows through the second regenerative heat exchanger;
decomposing the further feedstock in the reaction chamber so as to produce one or more further reaction products; and
flowing the one or more further reaction products out of the reaction chamber via the first regenerative heat exchanger, wherein heat from the one or more further reaction products is stored in the first regenerative heat exchanger as the one or more further reaction products flow through the first regenerative heat exchanger.

4. The method of claim 3, wherein:
the feedstock gas reactor further comprises:
an inlet adjacent the second regenerative heat exchanger;
and flowing the feedstock gas into the reaction chamber comprises:
flowing the feedstock gas into the reaction chamber via the inlet and then via the second regenerative heat exchanger.

5. The method of any one of claims 2-4, further comprising actively heating the second regenerative heat exchanger.

6. The method of any one of claims 1-5, wherein flowing the one or more reaction products out of the reaction chamber comprises flowing the one or more reaction products out of the reaction chamber via the first regenerative heat exchanger, wherein heat from the one or more reaction products is stored in the first regenerative heat exchanger as the one or more reaction products flow through the first regenerative heat exchanger.

7. The method of any one of claims 1-6, further comprising actively heating the first regenerative heat exchanger.

8. The method of claim 7, wherein actively heating the first regenerative heat exchanger comprises actively heating the first regenerative heat exchanger only when flowing the feedstock gas into the reaction chamber via the first regenerative heat exchanger.

9. The method of any one of claims 1-8, wherein decomposing the feedstock gas comprises:
injecting a hot fluid into the reaction chamber to mix with the feedstock gas, wherein heat from the hot fluid is transferred to the feedstock gas to decompose the feedstock gas.

10. The method of claim 9, wherein injecting the hot fluid comprises:
combusting a combustible gas mixture to produce one or more hot combustion products; and
injecting the one or more hot combustion products into the reaction chamber.

11. The method of claim 9 or 10, wherein:
the feedstock gas comprises one or more first compounds; and
the hot fluid comprises one or more second compounds selected so that, during decomposition of the feedstock gas, the one or more second compounds chemically react with the one or more first compounds to produce the one or more reaction products.

12. The method of any one of claims 1-11, wherein:
the feedstock gas reactor further comprises:
an inlet adjacent the first regenerative heat exchanger;
and flowing the feedstock gas into the reaction chamber comprises:
flowing the feedstock gas into the reaction chamber via the inlet adjacent the first regenerative heat exchanger and then via the first regenerative heat exchanger.

13. A system comprising:
a feedstock gas reactor comprising:
a reaction chamber; and
a first regenerative heat exchanger;
valving and one or more compressors for allowing fluids to flow into and out of the reaction chamber; and
a controller configured to control the valving and the one or more compressors so as to:
flow a feedstock gas into the reaction chamber via the first regenerative heat exchanger;
inject a hot fluid into the reaction chamber so as to decompose the feedstock gas and generate one or more reaction products; and
flow the one or more reaction products out of the reaction chamber.

14. The system of claim 13, wherein:
the feedstock gas reactor further comprises a second regenerative heat exchanger; and
the controller is further configured to control the valving and the one or more compressors so as to cause the one or more reaction products to flow out of the reaction chamber via the second regenerative heat exchanger, wherein heat from the one or
more reaction products is stored in the second regenerative heat exchanger as the one or more reaction products flow through the second regenerative heat exchanger.

15. The system of claim 13 or 14, wherein an axial heat conductivity of the first or second regenerative heat exchanger is lower than a radial heat conductivity of the first or second regenerative heat exchanger.
